# EUROPÄISCHE PATENTSCHRIFT

(11) **EP 2 411 280 B1**
(45) Veröffentlichungstag und Bekanntmachung des Hinweises auf die Patenterteilung: **06.03.2013**
(21) Anmeldenummer: 10710286.5
(22) Anmeldetag: 18.03.2010
(51) Int. Cl.: B64D 13/00, B64C 1/06

(54) **FLUGZEUGSTRUKTUR MIT IN STRUKTURELEMENTE INTEGRIERTE LUFTFÜHRUNGSSCHÄCHTE**
AEROPLANE STRUCTURE COMPRISING AIR GUIDING SHAFTS BUILT INTO STRUCTURAL ELEMENTS
STRUCTURE D'AVION AVEC COMPARTIMENTS DE GUIDAGE D'AIR INTÉGRÉS DANS LES ÉLÉMENTS STRUCTURAUX

(30) Priorität: 23.03.2009 DE 102009014377; 23.03.2009 US 162534 P
(43) Veröffentlichungstag der Anmeldung: 01.02.2012
(73) Patentinhaber: Airbus Operations GmbH, 21129 Hamburg (DE)
(72) Erfinder: BROWNJOHN, Nicholas, 21614 Buxtehude (DE); MÜHLTHALER, Georg, 22609 Hamburg (DE); OSTERNACK, Stefan, 20144 Hamburg (DE)
(74) Vertreter: Maiwald Patentanwalts GmbH
(86) Internationale Anmeldenummer: PCT/EP2010/053520
(87) Internationale Veröffentlichungsnummer: WO 2010/108842

(56) Entgegenhaltungen:
- WO-A1-2009/037006
- DE-A1-102006 002 248
- DE-A1-102007 061 429

## Beschreibung

### Gebiet der Erfindung

Die Erfindung betrifft eine Flugzeugstruktur mit hohlen, einen Flugzeugrumpf bildenden, tragenden Strukturelementen.

### Technologischer Hintergrund

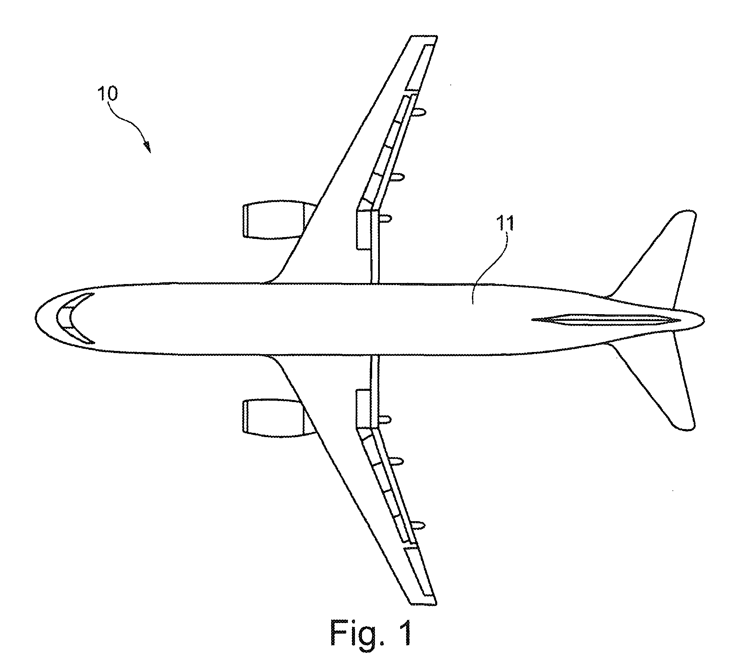

Fig. 1 stellt ein konventionelles Flugzeug 10 mit einem Flugzeugrumpf 11 dar. Ein solcher Flugzeugrumpf 11 wird üblicherweise aus Strukturelementen gebildet, die Längsspanten, Querspanten und Querträger umfassen. Diese Strukturelemente bilden eine zylinderartige Gitterstruktur, die mit einer Flugzeugaußenhaut abgedeckt ist.

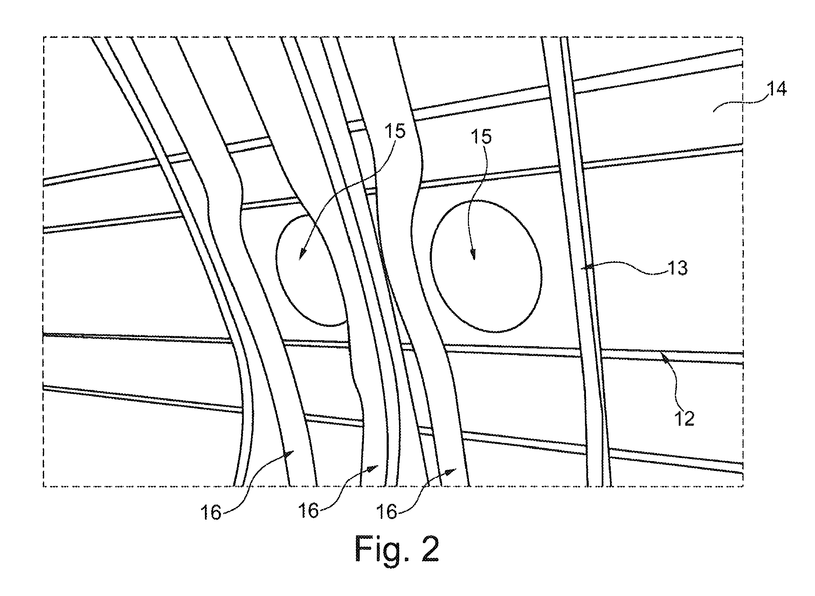

Fig. 2 zeigt einen derartigen herkömmlichen Aufbau einer Flugzeugrumpfstruktur. In Flugzeuglängsrichtung verlaufen dabei die Längsspanten 12 in gewissen Abständen und im Wesentlichen parallel zueinander. Quer zur Flugzeuglängsrichtung und die Querschnittsform (Zylinderform) des Flugzeugrumpfs vorgebend, verlaufen Querspanten 13, welche die Längsspanten 12 im Wesentlichen rechtwinklig kreuzen. Die aus Längsspanten 12 und Querspanten 13 gebildete Gitterstruktur ist durch die Flugzeugaußenhaut 14 abgedeckt. Zwischen zwei benachbarten Querspanten 13 sind Öffnungen für Fenster 15, oder andere Öffnungen für beispielsweise Türen, Notausgänge usw., vorgesehen. Zwischen den Querspanten 13 und den Fensteröffnungen 15 verlaufen im Wesentlichen parallel zu den Querspanten 13 Luftführungsschächte 16, welche Luft zur Klimatisierung der Flugzeugpassagierkabine von einer nicht dargestellten Klimaanlage in den Passagierraum fordern.

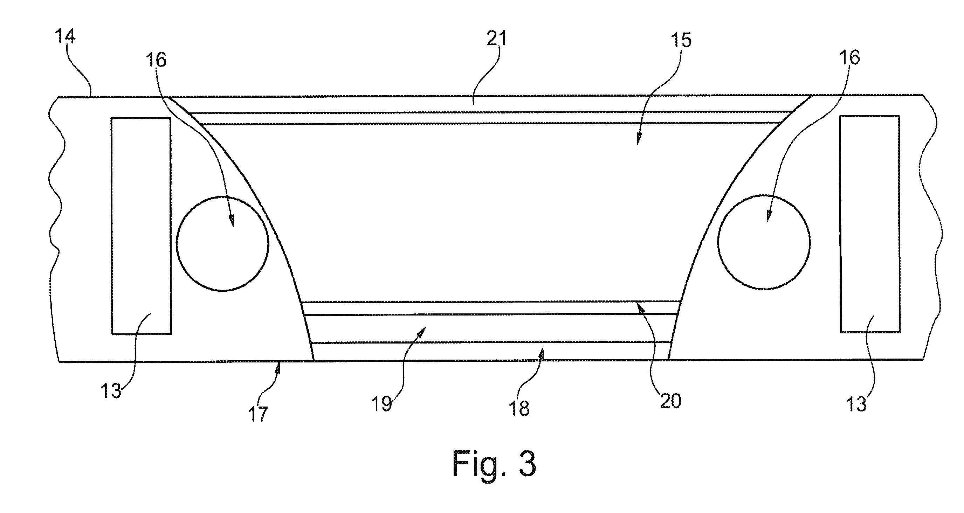

Fig. 3 zeigt eine Schnittdarstellung von oben im Bereich der Fensteröffnungen. Dabei ist zu erkennen, wie sich die Fensteröffnung 15 von der Rumpfaußenhaut 17 zu einer Innenverkleidung 14 der Flugzeugpassagierkabine hin trichterförmig erweitert. In der Fensteröffnung 15 ist auf der Außenseite zunächst ein Primärfenster 18 vorgesehen mit einem bestimmten belüfteten Bereich 19 dazwischen liegend folgt diesem Primärfenster 18 ein Sekundärfenster 20. Diesem Sekundärfenster 20 folgt mit einem größeren belüfteten Zwischenbereich ein Innenfenster 21. Beidseitig der trichterförmigen Fensteröffnung 15 sind die Luftführungsschächte 16 angeordnet. Diese Luftführungsschächte 16 liegen von oben betrachtet jeweils zwischen den Querspanten 13 und der Fensteröffnung 15.

DE 10 2006 002 248 A1 beschreibt eine strukturgebende Konstruktion für einen Flugzeugrumpf mit quer zur Rumpflängsrichtung verlaufenden Spanten, welche Luftversorgungsleitungen aufweisen.

WO 2009/037006 A1 beschreibt ein Strukturbauteil und einen Rumpf eines Luftfahrzeugs mit einem Hohlprofil zur Aufnahme eines Systemmediums.

DE 10 2007 061 429 A1 beschreibt eine Rumpfstruktur mit Strukturbauteilen in Form von Omega- oder V-Profilen.

### Zusammenfassung der Erfindung

Der Erfindung liegt die Aufgabe zugrunde, Alternativen für eine Flugzeugstruktur zu schaffen, die sich als vorteilhaft erweist.

Diese Aufgabe wird mit einer Flugzeugstruktur gemäß dem unabhängigen Anspruch gelöst.

Vorteilhafte Weiterentwicklungen der Erfindung sind Gegenstand der abhängigen Ansprüche.

Gemäß einem Ausführungsbeispiel der Erfindung wird eine Flugzeugstruktur bereitgestellt, mit hohlen, einen Flugzeugrumpf bildenden, tragenden Strukturelementen, wobei die Hohlräume in den Strukturelementen als Luftführungsschächte für eine Klimatisierung des Flugzeugs ausgebildet sind. Dies hat den Vorteil, dass sich dadurch Synergieeffekte ergeben und die Strukturelemente gleichzeitig die tragende Primärstruktur des Flugzeugs bilden sowie als Luftführung für die Klimatisierung dienen. Dadurch kann die Rumpfdicke (Distanz von der Flugzeuginnenverkleidung zur Flugzeugaußenhaut) verringert werden, wodurch sich ein vergrößerter Passagierkabinendurchmesser für einen bestimmten Rumpfaußendurchmesser ergibt. Ein wesentlicher Vorteil ist ferner, dass dadurch die Fenster vergrößert werden können, was zu einer helleren Flugzeugkabine mit angenehmerer Atmosphäre führt.

Vorteilhafterweise sind die Strukturelemente in diesem Zusammenhang Längsspanten, Querspanten und/oder Querträger.

Gemäß der Erfindung ist die Flugzeugstruktur derart ausgebildet, dass sich die Strukturelemente kreuzen und an den Kreuzungspunkten die in den Hohlräumen vorgesehenen Luftführungsschächte miteinander verbindbar sind. Dadurch kann ein völlig flexibel steuerbares Luftversorgungsnetz ausgebildet werden, welches den Flugzeugrumpf überspannt und viele Bereiche des Flugzeugrumpfs über die an den Kreuzungspunkten vorgesehenen Verbindungsstellen für Klimatisierungszwecke erreichbar macht.

Besonders vorteilhaft ist dabei, wenn die Luftführungsschächte mittels ansteuerbaren Stellgliedern verbindbar sind.

Gemäß einem weiteren Ausführungsbeispiel ist vorgesehen, dass in den Luftführungsschächten Steuerventile zur Steuerung der Luftströmung vorgesehen sind. Dadurch kann die Luftströmung und/oder der Luftdruck in jedem Luftführungsschacht dynamisch ausbalanciert, eingestellt und konfiguriert werden.

Gemäß einem anderen Ausführungsbeispiel ist die Flugzeugstruktur derart aufgebaut, dass die mit Luftführungsschächten versehenen Strukturelemente ein die Flugzeugstruktur zumindest teilweise überspannendes Netz bilden. Somit steht bereits mit Errichten der den Flugzeugrumpf ausbildenden Flugzeugstruktur ein Netz aus Luftführungsschächten bereit, so dass ein zusätzlicher Arbeitsschritt entfallen kann und dieses Netz aus Luftführungsschächten flexibel einsetzbar ist. Außerdem kann durch Integration der Luftführungsschächte in die Strukturelemente deutlich an Gewicht für die Flugzeugstruktur eingespart werden.

Noch mehr Gewicht kann dadurch eingespart werden, dass die Strukturelemente aus Kohlefaser ausgebildet sind.

Gemäß einem anderen Ausführungsbeispiel sind zwei Luftführungsschächte im Hohlraum eines Strukturelements vorgesehen, die so ausgelegt sind, dass sie Luft in entgegengesetzte Richtungen führen. Somit kann ein noch flexibleres Netz an Luftfiihrungsschächten zur Klimatisierung geschaffen werden.

Gemäß einem weiteren Ausführungsbeispiel ist ein Flugzeug mit einer Flugzeugstruktur gemäß einem der vorhergehenden Ausführungsbeispiele bereitgestellt. Dieses Flugzeug bietet den Vorteil, dass es weniger Leergewicht als ein bisheriges Flugzeug hat, wodurch wiederum die zu befördernde Nutzlast erhöht werden kann. Dadurch ist das so geschaffene Flugzeug wirtschaftlicher für den Flugzeugbetreiber.

Im Folgenden werden mit Verweis auf die Figuren Ausführungsbeispiele der Erfindung beschrieben.

### Kurze Figurenbeschreibung

- Fig. 1: zeigt ein Flugzeug mit einem aus Primärstrukturelementen gebildeten Flugzeugrumpf;
- Fig. 2: zeigt einen herkömmlichen Flugzeugstrukturaufbau;
- Fig. 3: zeigt eine Schnittdarstellung von oben im Bereich der Fensteröffnungen;
- Fig. 4a: zeigt einen Kreuzungspunkt aus Längsspant und Querspant gemäß einem Ausführungsbeispiel der Erfindung;
- Fig. 4b: zeigt eine Schnittdarstellung entlang der in Fig. 4a eingezeichneten Linie A-A;
- Fig. 5: zeigt eine Schnittdarstellung von oben im Fensterbereich gemäß einem Ausführungsbeispiel der Erfindung; die
- Fig. 6a - 6d: zeigen einen Kreuzungspunkt aus Querspant und Längsspant gemäß einem Ausführungsbeispiel der Erfindung;
- Fig. 7: zeigt einen Kreuzungspunkt von Querspant, Längsspant und Querträger gemäß einem Ausführungsbeispiel der Erfindung; und
- Fig. 8: zeigt einen Abschnitt des Flugzeugrumpfs mit den integrierten Luftführungsschächten gemäß einem Ausführungsbeispiel der Erfindung.

### Detaillierte Beschreibung von Ausführungsbeispielen

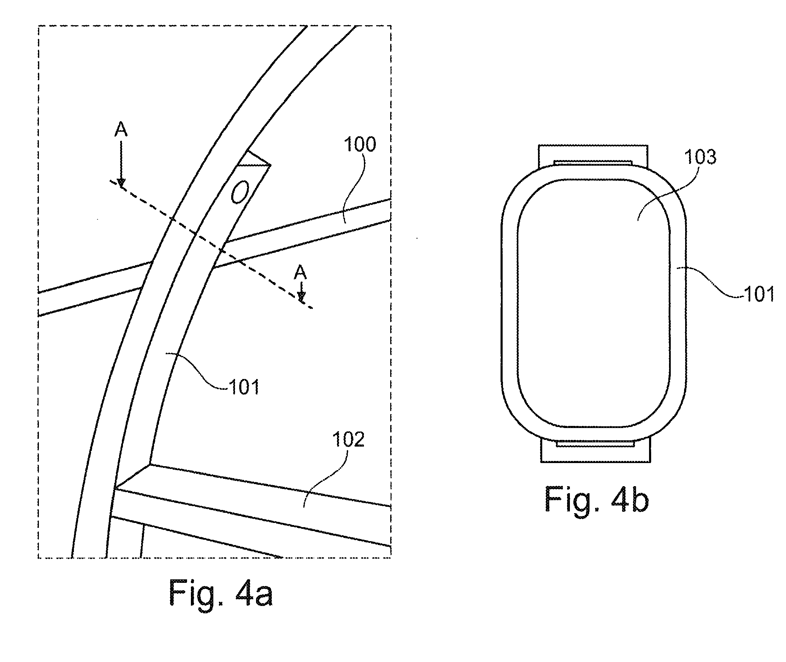

Fig. 4a zeigt einen Kreuzungspunkt von Längsspant 100 und Querspant 101. Wie bereits unter Bezugnahme auf Fig. 2 beschrieben, verlaufen in Flugzeuglängsrichtung Längsspanten 100 und im Wesentlichen rechtwinklig dazu Querspanten 101. Diese Querspanten 101 geben im Wesentlichen die Außenform des Rumpfquerschnitts vor und verlaufen bogenförmig um eine Längsachse des Flugzeugs 10. Quer zur Flugzeuglängsrichtung und in der Horizontalen (bezogen auf das am Boden stehende Flugzeug) verlaufen Querträger 102, auf denen beispielsweise ein Kabinenboden oder ein Frachtraumboden montierbar ist. Üblicherweise verlaufen im Flugzeugbau einige Längsspanten 100 parallel zueinander in Flugzeuglängsrichtung. Diese Strukturelemente 100, 101 und 102 können aus Metall, Metallmatrix-Verbundwerkstoffen oder Verbundmaterialien, wie beispielsweise Kohle- oder Glasfaser verstärkten Epoxidharzen hergestellt sein. Diese Strukturelemente 100, 101 und 102 sind sogenannte Primärstrukturelemente, die die auf den Flugzeugrumpf 11 wirkenden Kräfte aufnehmen, also tragende Bauteile sind.

Fig. 4b stellt eine Schnittdarstellung entlang der in Fig. 4a eingezeichneten Linie A-A dar, wobei der Schnitt im Wesentlichen senkrecht zur Längsrichtung des Querspants 101 verläuft. In Fig. 4b ist der Querspant 101 dargestellt, dessen Wandung die auf den Rumpf wirkenden Kräfte aufnimmt und für die Stabilität des Flugzeugrumpfs 11 sorgt. Der bogenförmige Querspant 101 hat im Querschnitt eine im Wesentlichen rechteckige Form mit abgerundeten Ecken, dessen Inneres hohl ist. Der im Inneren des Querspants 101 befindliche Hohlraum bildet einen Luftschacht 103, der eine Luft für Klimatisierungszwecke von einer nicht dargestellten Klimaanlage in einen Flugzeugpassagierraum (und/oder einen Frachtraum) transportiert.

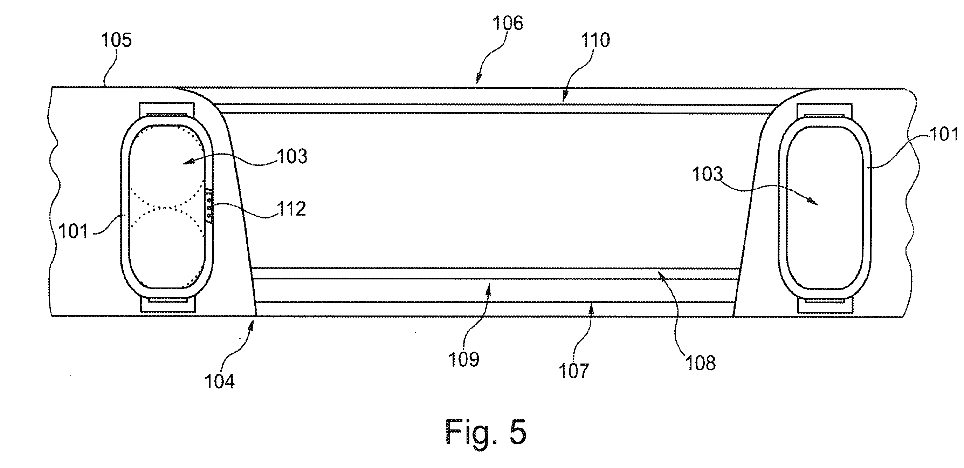

Fig. 5 zeigt eine Schnittdarstellung von oben im Bereich einer Fensteröffnung 106 gemäß einem Ausführungsbeispiel der Erfindung. Zwischen einer Rumpfaußenhaut 104 und einer Kabineninnenverkleidung 105 erstreckt sich im Wesentlichen trichterförmig eine Fensteröffnung 106. Die Fensteröffnung 106 ist auf der Rumpfaußenseite, im Wesentlichen bündig zur Rumpfaußenhaut 104, mit einem Primärfenster 107 versehen. Benachbart zum Primärfenster ist ein Sekundärfenster 108 angeordnet, wobei zwischen Primärfenster 107 und Sekundärfenster 108 ein belüfteter Bereich 109 ausgebildet ist. Auf der Innenseite, d.h. zum Passagierraum hin, ist ein Innenfenster 110 angeordnet, wobei zwischen Sekundärfenster 108 und Innenfenster 110 ein belüfteter Bereich vorgesehen ist. Beidseitig der Fensteröffnung 106 verlaufen die erfindungsgemäßen Querspanten 101 mit den darin ausgebildeten Luftführungen 103. Die Luftführungen 103 können dabei so ausgebildet sein, dass die Wandung des Querspants 101 die Luft führt, wie dies in Fig. 5 im rechts dargestellten Querspant 101 vorgesehen ist. Ferner können die Luftführungen 103 so ausgebildet sein, dass sie eine eigene Wandung aufweisen, so dass auch mehrere Luftführungen 103 innerhalb eines Hohlraums eines Querspants 101 vorgesehen sein können, wie dies bei dem in Fig. 5 links dargestellten Querspant 101 der Fall ist. Solche Luftführungen 103 können so ausgebildet sein, dass beispielsweise zwei Luftführungen 103 innerhalb eines Querspants 101 vorgesehen sind, die rohrförmig sind und von denen eine der zwei Luftführungen 103 Luft in eine Richtung führt und die andere der beiden Luftführungen 103 Luft in die entgegengesetzte Richtung führt. Der vorstehend beschriebene Aufbau kann auch im Bereich von Türen oder Notausgängen vorgesehen sein, d.h. die Fensteröffnung 106 kann auch eine Öffnung für eine Tür oder einen Notausgang sein.

Als weitere vorteilhafte Weiterentwicklung können in das Material der Strukturelemente 100, 101 und 102 insbesondere optische, aber auch elektrische Leitungen 112, eingebettet sein. Alternativ dazu können diese Leitungen auch auf den Strukturelementen angeordnet und fest mit diesen verbunden sein. Dadurch ist eine weitere funktionelle Weiterentwicklung geschaffen, durch welche die Strukturelemente neben ihrer tragenden Funktion auch die Funktion zur Luftführung und zur Leitung von Strom, Daten, usw. übernehmen. Dies spart Arbeitsschritte ein, da bereits mit Fertigstellung der Rumpfstruktur diese Funktionalitäten realisiert sind.

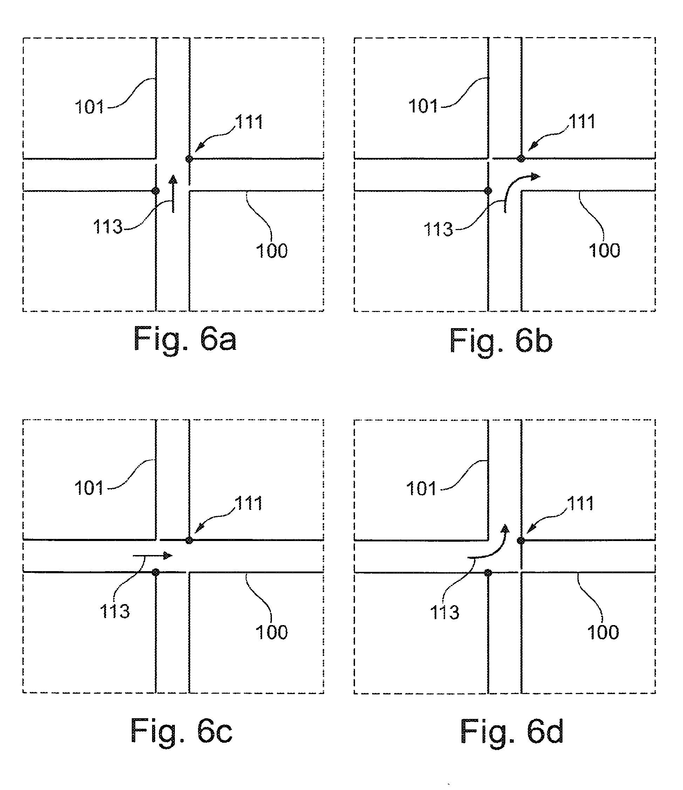

Die Fig. 6a bis 6d zeigen verschiedene Stellungen eines schematisch dargestellten Stellgliedes, welches an einem Kreuzungspunkt aus Längsspant 100 und Querspant 101 angeordnet ist. Dabei ist das Stellglied 111 schematisch als zwei verschwenkbare Klappen dargestellt, deren Stellung ermöglicht, einen Luftstrom 113 je nach Bedarfvon dem in einem Querspant 101 angeordneten Luftführungsschacht 103 kommend in einen in einem Längsspant 100 vorgesehenen Luftführungsschacht 103 umzulenken oder umgekehrt. Der dabei umgelenkte Luftstrom ist in den Fig. 6a bis 6d als Pfeil 113 dargestellt. Oder aber, das Stellglied 111 ist so ausgerichtet, dass keine Umlenkung stattfindet und der Luftstrom an dem Kreuzungspunkt in dem jeweiligen Längsspant 100 oder Querspant 101 weitergeführt wird. Hinsichtlich der Steuerbarkeit des Systems wäre ideal, wenn an jedem Kreuzungspunkt aus Längsspant 100 und Querspant 101 ein solches Stellglied 111 vorgesehen wäre, jedoch wird in der Praxis ein Kompromiss aus Steuerbarkeit und akzeptablem Flugzeugleergewicht gefunden werden müssen, da mit jedem Stellglied das Leergewicht des Flugzeugs erhöht wird. Als Stellglied 111 können dabei beispielsweise Flügelventile zum Einsatz kommen.

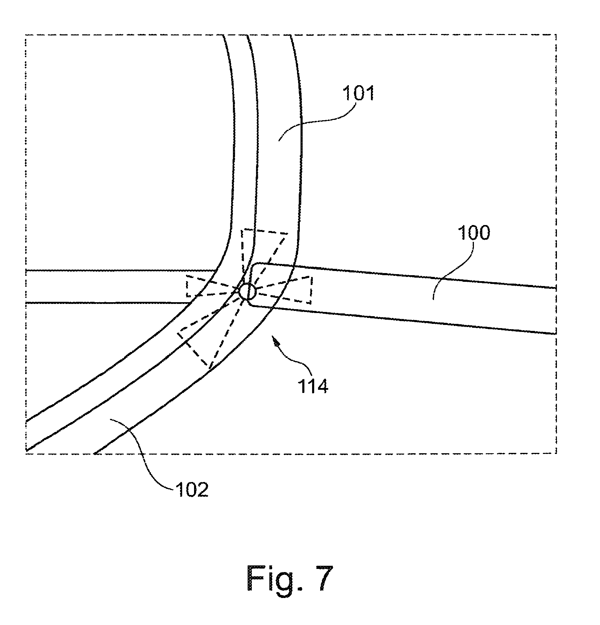

Fig. 7 zeigt einen Kreuzungspunkt von Querspant 101, Längsspant 100 und Querträger 102 gemäß einem Ausführungsbeispiel der Erfindung. An einem derartigen Kreuzungspunkt kann ein Stellglied 114 in den jeweiligen Luftführungsschächten 103 vorgesehen sein, welches ebenfalls als Flügelventil ausgeführt ist. Das Stellglied 114 kann einen Luftstrom von einem Querträger 102 in einen Querspant 101 oder in einen Längsspant 100 umleiten oder umgekehrt. Ferner kann das Stellglied 114 einen Luftstrom von einem Längsspant 100 in einen Querspant 101 oder einen Querträger 102 umleiten oder umgekehrt.

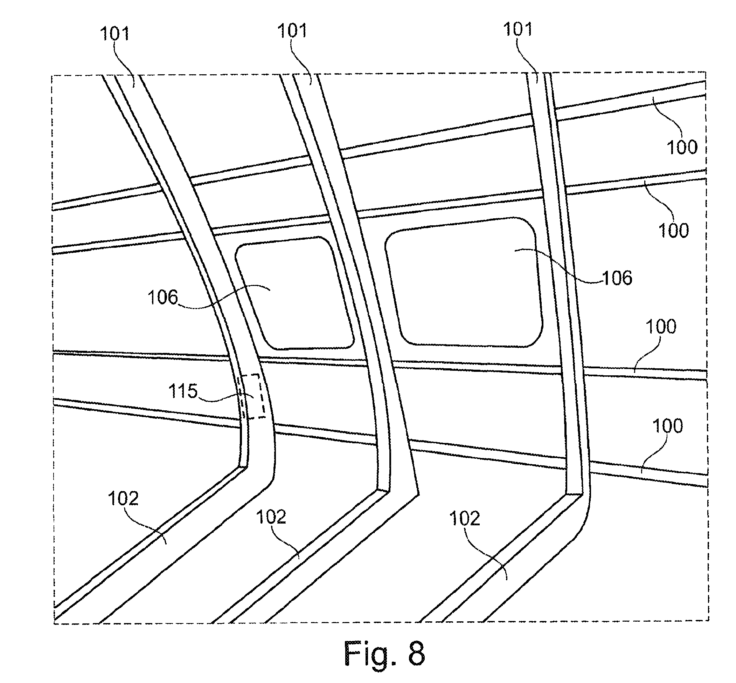

Fig. 8 zeigt einen Abschnitt des Flugzeugrumpfs 11 mit den integrierten Luftführungsschächten 103 gemäß einem Ausführungsbeispiel der Erfindung. Wie aus dieser Darstellung ersichtlich wird aus Längsspanten 100, Querspanten 101 und Querträgern 102 eine Gitterstruktur gebildet, welche die Form des Flugzeugrumpfs vorgibt. In sämtlichen Strukturelemente 100, 101 und 102 sind dabei in erfindungsgemäßer Weise die Luftführungsschächte 103 integriert. An einigen oder allen Kreuzungspunkten dieser Strukturelemente 100, 101 und 102 sind Stellglieder 11 oder 114 vorgesehen, die aus Gründen der Übersichtlichkeit nicht mehr eingezeichnet sind. Zusätzlich ist ein variables Steuerventil 115 in den Luftführungsschächten 103 vorgesehen, wobei aus Gründen der Übersichtlichkeit nur ein einziges Steuerventil 115 in Fig. 8 schematisch angedeutet ist. Dieses Steuerventil 115 steuert den Strömungsquerschnitt des jeweiligen Luftfiihrungsschachts 103 und dient zum Steuern der Luftströmung und/oder des Luftdrucks in dem jeweiligen Luftfiihrungsschacht 103. Ein einziges oder mehrere solcher Steuerventile 115 sind vorzugsweise in jedem Längsspant 100, jedem Querspant 101 und jedem Querträger 102 vorgesehen und zwar vorzugsweise an der Stelle, an der dem jeweiligen Luftführungsschaft 103 Luft zugeführt wird oder kurz nach einem Kreuzungspunkt. Auch bei den Steuerventilen 115 wird in der Praxis ein Kompromiss aus Steuerbarkeit und Gewichtsoptimierung des Flugzeugs gefunden werden müssen. Das Steuerventil 115 ist vorzugsweise ein Venturiventil, das im Querschnitt des Luftführungsschachts 103 angeordnet ist. Die Stellglieder 111 und 114 dienen demnach zur Steuerung, wie ein Luftstrom geführt werden soll und ob ein Luftführungsschacht überhaupt durchströmbar ist und die Steuerventile 115 dienen zur Einstellung der Strömung im jeweiligen Luftführungsschacht 103. Die Funktionalitäten dieser Stellglieder/Steuerventile können auch kombiniert werden, so dass an den Kreuzungspunkten von Strukturelementen 100, 101, 102 Steuerelemente vorgesehen werden, mit denen die beschriebenen Funktionalitäten vereint werden.

Somit ist idealerweise durch das beschriebene Ausführungsbeispiel ein die komplette Passagierkabine überspannendes Netz aus in Strukturelemente 100, 101, 102 integrierten Luftführungsschächten 103 geschaffen, welches mittels einer Steuereinheit, die mit den Stellgliedern 111, 114 und den Steuerventilen 115 gekoppelt ist, kundenabhängig programmierbar und konfigurierbar ist. Es kann somit bequem durch die Änderung der Ansteuerung der Stellglieder 111, 114 und der Steuerventile 115 die Klimatisierung und Luftströmungsverteilung in der Passagierkabine verändert und angepasst werden, ohne dass Umbaumaßnahmen erforderlich wären. Dies ist besonders vorteilhaft im Hinblick auf eine Änderung der Konfiguration der Passagierkabine (Umstellung von Sitzabständen, veränderte Platzierung von Küchen, Toiletten, usw.). Bei einer derartigen Änderung der Konfiguration kann die Klimatisierung und Luftverteilung bei entsprechender Programmierung der Steuereinheit bequem per Knopfdruck dieser neuen Konfiguration angepasst werden.

Es sei darauf hingewiesen, dass Merkmale, die mit Verweis auf eines der obigen Ausführungsbeispiele bzw. einer Ausführung beschrieben worden sind, auch in Kombination mit anderen Merkmalen anderer obiger Ausführungsbeispiele verwendet werden können.

## Patentansprüche

1. Flugzeugstruktur mit hohlen, einen Flugzeugrumpf (11) bildenden, tragenden Strukturelementen (100, 101, 102), wobei die Hohlräume in den Strukturelementen als Luftführungsschächte (103) für eine Klimatisierung des Flugzeugs (10) ausgebildet sind;
wobei sich die Strukturelemente (100,101,102) kreuzen und an den Kreuzungspunkten die in den Hohlräumen vorgesehenen Luftführungsschächte (103) miteinander verbindbar sind, so dass ein Luftversorgungsnetz ausgebildet ist.

2. Flugzeugstruktur gemäß Anspruch 1, wobei die Strukturelemente (100, 101, 102) Längsspanten, Querspanten und/oder Querträger sind.

3. Flugzeugstruktur gemäß Anspruch 1 oder 2, wobei die Luftführungsschächte (103) mittels ansteuerbaren Stellgliedern (111) verbindbar sind.

4. Flugzeugstruktur gemäß einem der vorhergehenden Ansprüche, wobei in den Luftführungsschächten (103) Steuerventile (115) zur Steuerung der Luftströmung vorgesehen sind.

5. Flugzeugstruktur gemäß einem der vorhergehenden Ansprüche, wobei die mit Luftfiihrungsschächten (103) versehenen Strukturelemente (100, 101, 102) ein die Flugzeugstruktur zumindest teilweise überspannendes Netz bilden.

6. Flugzeugstruktur gemäß einem der vorhergehenden Ansprüche, wobei die Strukturelemente (100, 101, 102) aus Kohlefaser sind.

7. Flugzeugstruktur gemäß einem der vorhergehenden Ansprüche, wobei zwei Luftftihrungsschächte (103) im Hohlraum eines Strukturelements (100, 101, 102) vorgesehen sind, die so ausgelegt sind, dass sie Luft in entgegengesetzte Richtungen führen.

8. Flugzeug (10) mit einer Flugzeugstrulctur gemäß einem der vorhergehenden Ansprüche.

## Claims

1. An aircraft structure with hollow, load-bearing structural elements (100, 101, 102) that form an aircraft fuselage (11), wherein the cavities in the structural elements are designed as air ducts (103) for air conditioning of the aircraft (10);
wherein the structural elements (100, 101, 102) cross each other, and the air ducts (103) provided in the cavities can be joined together at the intersecting points, such that an air supply network is formed.

2. The aircraft structure of claim 1, wherein the structural elements (100, 101, 102) are longitudinal frames, transverse frames, and/or transverse beams.

3. The aircraft structure of any one of claims 1 or 2, wherein the air ducts (103) can be connected by means of activatable actuators (111).

4. The aircraft structure of any one of the preceding claims, wherein control valves (115) are provided in the air ducts (103) for controlling the air flow.

5. The aircraft structure of any one of the preceding claims, wherein the structural elements (100, 101, 102) provided with air ducts (103) form a network that at least partially spans the aircraft structure.

6. The aircraft structure of any one of the preceding claims, wherein the structural elements (100, 101, 102) consist of carbon fiber.

7. The aircraft structure of any one of the preceding claims, wherein two air ducts (103) are provided in the cavity of a structural element (100, 101, 102), which air ducts are configured such as to carry air in opposite directions.

8. An aircraft (10) with an aircraft structure of one of the preceding claims.

## Revendications

1. Structure d'avion avec des éléments structuraux (100, 101, 102) porteurs, creux et formant un fuselage d'avion (11), les espaces creux dans les éléments structuraux prenant la forme de compartiments de guidage d'air (103) pour une climatisation de l'avion (10) ; les éléments de structure (100, 101, 102) se croisant et les compartiments de guidage d'air (103) prévus dans les espaces creux pouvant être raccordés entre eux aux points de croisement, de telle sorte qu'un réseau d'alimentation en air est formé.

2. Structure d'avion selon la revendication 1, les éléments de structure (100, 101, 102) étant des membrures longitudinales, des membrures transversales et/ou des longerons transversales.

3. Structure d'avion selon la revendication 1 ou 2, les compartiments de guidage d'air (103) pouvant être raccordés au moyen d'éléments de réglage (111) pouvant être commandés.

4. Structure d'avion selon l'une des revendications précédentes, des soupapes de commande (115) étant prévus dans les compartiments de guidage d'air (103) pour la commande du courant d'air.

5. Structure d'avion selon l'une des revendications précédentes, les éléments de structure (100, 101, 102) pourvus de compartiments de guidage d'air (103) formant un réseau qui recouvre au moins partiellement la structure d'avion.

6. Structure d'avion selon l'une des revendications précédentes, les éléments de structure (100, 101, 102) étant en fibre de carbone.

7. Structure d'avion selon l'une des revendications précédentes, deux compartiments de guidage d'air (103) étant prévus dans l'espace creux d'un élément de structure (100, 101, 102), conçus pour qu'ils guident l'air dans des directions opposées.

8. Avion (10) avec une structure d'avion selon l'une des revendications précédentes.
